# EUROPEAN PATENT APPLICATION

(11) **EP 3 691 109 A1**
(43) Date of publication of application: **05.08.2020**
(21) Application number: 20154013.5
(22) Date of filing: 28.01.2020
(51) Int. Cl.: H02N 1/04, A43B 3/00, A43B 13/12, A43B 17/00

(54) **POWER-GENERATING INSOLE**

(30) Priority: 30.01.2019 CN 201910094024
(71) Applicant: Calson Investment Limited, Hong Kong (HK)
(72) Inventor: CHOU HAR, WU, Hong Kong (HK); BINGANG, XU, Hong Kong (HK); JIANLIANG, GONG, Hong Kong (HK)
(74) Representative: Isern Patentes y Marcas S.L.

(57) **Abstract**

The embodiments of the present invention disclose a power-generating insole and a method for manufacturing the same, a power-generating blanket and a power-generating sock, wherein: the power-generating insole comprises a power-generating fabric structure and a waterproof shield; the waterproof shield coats an outer surface of the power-generating fabric structure; the power-generating fabric structure comprises a first conductive yarn and a second conductive yarn, and the first conductive yarn and the second conductive yarn are interwoven together; the first conductive yarn is made of a conductive material; the second conductive yarn comprises a conductive core and an insulating cladding, the conductive core is made of a conductive material, the insulating cladding is made of an insulating material, and the insulating cladding coats an outer surface of the conductive core; with the design that the first conductive yarn and the second conductive yarn are interwoven to form the power-generating fabric structure of three-dimensional porous network structure, the power-generating insole can effectively convert mechanical energy into electric energy in both compression and releasing process, and the power generation efficiency of the power-generating insole is improved.

## Description

### TECHNICAL FIELD

The embodiments of the present invention relate to the field of textiles and energy, in particular to a power-generating insole and a method for manufacturing the same, a power-generating blanket and a power-generating sock.

### BACKGROUND

Wearable electronic devices (such as smart watches, sports bracelets, wireless headsets, smart glasses, various sensors, smart electronic textiles etc.) are widely used in the fields of national defense and military, medical treatment and healthcare, human-computer interaction, sports and entertainment, etc. At present, power supply of wearable electronic devices relies primarily on various types of batteries that can convert chemical energy into electric energy. However, such batteries need to be recharged repeatedly and their power usage must be watched constantly, and it is troublesome to frequently change batteries or find a place to charge them. For the above reasons, the limitation on applications of conventional chemical battery products and technologies in the rapidly developing wearable electronic device industry is increasingly serious, and people's requirements on wearable electronic device products, such as long-time endurance, comfortable wearing, safety, lightness and the like, are more and more difficult to meet.

Now, a device that can be worn under feet and can convert mechanical energy into electric energy (such as a mechanical energy power-generating sole or insole) is combined with wearable electronic devices to form a natural portable self-energized system, by which people's worrying about power exhaustion of batteries of portable electronic devices can be eliminated, and the use of conventional batteries which consume a lot of non-renewable fossil resources and cause environment pollutions can be reduced.

However, in the process of implementing the present invention, the inventors have found the following technical problems in the prior art: when applied to an insole with limited area and thickness, an existing mechanical energy power-generating device can hardly generate enough electric energy to drive the electronic device to work properly and is less efficient in converting mechanical energy into electric energy, thereby providing a low power generation efficiency.

### SUMMARY

The embodiments of the present invention mainly solve the technical problems of low efficiency in converting mechanical energy into electric energy and low power generation efficiency of the existing mechanical energy power-generating device.

In order to solve the above technical problems, an embodiment of the invention adopts the following technical scheme: a power-generating insole is provided, comprising: a power-generating fabric structure and a waterproof shield; the waterproof shield coats an outer surface of the power-generating fabric structure;
the power-generating fabric structure comprises a first conductive yarn and a second conductive yarn, and the first conductive yarn and the second conductive yarn are interwoven together;
the first conductive yarn is made of a conductive material; the second conductive yarn comprises a conductive core and an insulating cladding, the conductive core is made of a conductive material, the insulating cladding is made of an insulating material, and the insulating cladding coats an outer surface of the conductive core;
when an external force is applied to the power-generating insole, contact friction is generated between the first conductive yarn and the second conductive yarn in the power-generating fabric structure; and when the external force applied to the power-generating insole is removed, the first conductive yarn and the second conductive yarn separate from each other, and a potential difference is generated between the first conductive yarn and the second conductive yarn when contact friction is successively generated between the first conductive yarn and the second conductive yarn.

Alternatively, the power-generating insole further comprises a first insulating layer, and the first insulating layer is disposed between the power-generating fabric structure and the waterproof shield, and the first insulating layer coats the outer surface of the power-generating fabric structure.

Alternatively, the power-generating insole further comprises a first conductive layer, and the first conductive layer is disposed between the first insulating layer and the waterproof shield, and the first conductive layer is connected to the second conductive yarn.

Alternatively, the power-generating fabric structure comprises a plurality of conductive fabric layers which are arranged in lamination;
each conductive fabric layer comprises the first conductive yarn and the second conductive yarn, and the first conductive yarn and the second conductive yarn are interwoven to form the conductive fabric layer;
the first conductive yarn of each conductive fabric layer is connected to the first conductive yarn of an adjacent conductive fabric layer; and
the second conductive yarn of each conductive fabric layer is connected to the second conductive yarn of an adjacent conductive fabric layer.

Alternatively, the first conductive yarn of each conductive fabric layer is bent in a first direction to form a plurality of first fabric units, and the plurality of first fabric units are sequentially connected in the first direction to form a first fabric structure;
the second conductive yarn of each conductive fabric layer is bent in the first direction to form a plurality of second fabric units, and the plurality of second fabric units are sequentially connected in the first direction to form a second fabric structure;
a plurality of first fabric structures and a plurality of second fabric structures are sequentially interwoven in a second direction to form the conductive fabric layer, and the first direction and the second direction form a preset angle of more than 0 degree and less than 180 degrees.

Alternatively, a plurality of first gaps are formed at positions where the plurality of first fabric structures and the plurality of second fabric structures are interwoven.

Alternatively, the first conductive yarn of each conductive fabric layer is bent in a first direction to form a plurality of first fabric units, and the plurality of first fabric units are sequentially connected in a second direction to form a first fabric structure;
the second conductive yarn of each conductive fabric layer is bent in the second direction to form a plurality of second fabric units, and the plurality of second fabric units are sequentially connected in the first direction to form a second fabric structure, and the first direction and the second direction form a preset angle of more than 0 degree and less than 180 degrees; and
the first fabric structure and the second fabric structure are interwoven to form the conductive fabric layer.

Alternatively, a plurality of first gaps are formed at positions where the plurality of first fabric units and the plurality of second fabric units are interwoven.

Alternatively, the power-generating fabric structure comprises a plurality of stacking units, and each stacking unit is of three-dimensional structure and comprises the first conductive yarn and the second conductive yarn; and
each stacking unit is sequentially connected to an adjacent stacking unit to form the power-generating fabric structure.

Alternatively, each stacking unit is provided with a first folding groove; and
a second folding groove is formed at a joint of each stacking unit and an adjacent stacking unit.

Alternatively, the power-generating insole further comprises a first flexible electrode and a second flexible electrode, one end of the first flexible electrode is connected to the first conductive yarn, and the other end of the first flexible electrode is connected to a load; and
one end of the second flexible electrode is connected to the second conductive yarn, and the other end of the second flexible electrode is connected to the load.

Alternatively, one end of the first conductive yarn extends out of the power-generating fabric structure, the part, extending out of the power-generating fabric structure, of the first conductive yarn serves as the first flexible electrode, and the waterproof shield coats an outer surface of the first flexible electrode; and
one end of the second conductive yarn extends out of the power-generating fabric structure, and the part, extending out of the power-generating fabric structure, of the second conductive yarn serves as the second flexible electrode.

Alternatively, the power-generating insole further comprises a rectifying device, an electric collecting device and a power management device;
the first flexible electrode and the second flexible electrode are respectively connected to the rectifying device, and the rectifying device is used for rectifying and filtering a current generated by the power-generating insole;
the electric collecting device is connected to the rectifying device, and the electric collecting device is used for storing electric energy obtained by rectification of the rectifying device;
the power management device is connected to the electric collecting device, and the power management device is used for outputting the electric energy stored in the electric collecting device and controlling the magnitude of an output current; and
the current management device is used for connecting to the load.

In order to solve the above technical problems, an embodiment of the invention further adopts the following technical scheme: a power-generating blanket is provided, comprising the aforementioned power-generating insole.

In order to solve the above technical problems, an embodiment of the invention further adopts the following technical scheme: a power-generating sock is provided, comprising the aforementioned power-generating insole.

In order to solve the above technical problems, an embodiment of the invention further adopts the following technical scheme: a power-generating insole is provided, comprising a power-generating fabric structure, a first insulating layer and a waterproof shield;
the first insulating layer is disposed between the power-generating fabric structure and the waterproof shield; the first insulating layer coats an outer surface of the power-generating fabric structure; the waterproof shield coats the outer surface of the power-generating fabric structure;
the power-generating fabric structure comprises a first conductive yarn and a second conductive yarn, and the first conductive yarn and the second conductive yarn are interwoven together;
when an external force is applied to the power-generating insole, contact friction is generated between the first conductive yarn and the second conductive yarn as well as the first insulating layer in the power-generating fabric structure; and when the external force applied to the power-generating insole is removed, the first conductive yarn and the second conductive yarn as well as the first insulating layer in the power-generating fabric structure separate from each other, and a potential difference is generated between the first conductive yarn and the second conductive yarn in the power-generating fabric structure when contact friction is successively generated between the first conductive yarn and the second conductive yarn as well as the first insulating layer in the power-generating fabric structure.

Alternatively, the power-generating insole further comprises a first flexible electrode and a second flexible electrode, one end of the first flexible electrode is connected to the first conductive yarn, and the other end of the first flexible electrode is used for connecting to a load; and
one end of the second flexible electrode is connected to the second conductive yarn, and the other end of the second flexible electrode is used for connecting to the load.

Alternatively, the power-generating insole further comprises a first conductive layer, and the first conductive layer is disposed between the first insulating layer and the waterproof shield, and the first conductive layer is connected to the second flexible electrode.

Alternatively, the power-generating fabric structure comprises a plurality of conductive fabric layers which are arranged in lamination;
each conductive fabric layer comprises at least one first conductive yarn; one first conductive yarn is bent to form the conductive fabric layer, or a plurality of first conductive yarns are interwoven to form the conductive fabric layer; and
the first conductive yarn of each conductive fabric layer is connected to the first conductive yarn of an adjacent conductive fabric layer.

Alternatively, the first conductive yarn of each conductive fabric layer is bent in a first direction to form a plurality of first fabric units, and the plurality of first fabric units are sequentially connected in the first direction to form a first fabric structure;
a plurality of first fabric structures are sequentially interwoven in a second direction to form the conductive fabric layer, and the first direction and the second direction form a preset angle of more than 0 degree and less than 180 degrees.

Alternatively, a plurality of first gaps are formed at positions where the plurality of first fabric structures are interwoven.

In order to solve the above technical problems, an embodiment of the invention further adopts the following technical scheme: a power-generating blanket is provided, comprising the aforementioned power-generating insole.

In order to solve the above technical problems, an embodiment of the invention further adopts the following technical scheme: a power-generating sock is provided, comprising the aforementioned power-generating insole.

In order to solve the above technical problems, an embodiment of the invention further adopts the following technical scheme: a method for manufacturing a power-generating insole is provided, comprising: coating an outer surface of a conductive core with an insulating cladding to form a second conductive yarn, the conductive core being made of a conductive material, and the insulating cladding being made of an insulating material;
interweaving a first conductive yarn and the second conductive yarn to form a power-generating fabric structure, the first conductive yarn being made of a conductive material;
respectively extending one end of the first conductive yarn and one end of the second conductive yarn out of the power-generating fabric structure such that the part, extending out of the power-generating fabric structure, of the first conductive yarn serves as a first flexible electrode and the part, extending out of the power-generating fabric structure, of the second conductive yarn serves as a second flexible electrode; and

coating both outer surfaces of the power-generating fabric structure and the first flexible electrode with a waterproof shield.

In order to solve the above technical problems, an embodiment of the invention further adopts the following technical scheme: a method for manufacturing a power-generating insole is provided, comprising:
coating an outer surface of a conductive core with an insulating cladding to form a second conductive yarn, the conductive core being made of a conductive material, and the insulating cladding being made of an insulating material;
interweaving a first conductive yarn and the second conductive yarn to form a power-generating fabric structure, the first conductive yarn being made of a conductive material;
respectively extending one end of the first conductive yarn and one end of the second conductive yarn out of the power-generating fabric structure such that the part, extending out of the power-generating fabric structure, of the first conductive yarn serves as a first flexible electrode and the part, extending out of the power-generating fabric structure, of the second conductive yarn serves as a second flexible electrode; and
coating the power-generating fabric structure with a first insulating layer;
bonding a first conductive layer to the first insulating layer; and
coating both the first conductive layer and the first flexible electrode with a waterproof shield.

In order to solve the above technical problems, an embodiment of the invention further adopts the following technical scheme: a method for manufacturing a power-generating insole is provided, comprising:
bending one first conductive yarn or interweaving a plurality of first conductive yarns to form a power-generating fabric structure, and extending one end of the first conductive yarn out of the power-generating fabric structure such that the part, extending out of the power-generating fabric structure, of the first conductive yarn serves as a first flexible electrode;
coating the power-generating fabric structure with a first insulating layer;
bonding a first conductive layer to the first insulating layer, and connecting a second flexible electrode to the first conductive layer; and
coating both the first conductive layer and the first flexible electrode with a waterproof shield.

Compared with the prior art, the power-generating insole provided by the embodiments of the present application is advantageous in that, with the design that the first conductive yarn and the second conductive yarn are interwoven to form the power-generating fabric structure of three-dimensional porous network structure, when an external force is applied to the power-generating insole, contact friction and sliding friction are generated between the first conductive yarn and the second conductive yarn in a limited three-dimensional space, and when the external force is removed, the first conductive yarn and the second conductive yarn can recover and separate from each other. The power-generating insole can effectively convert mechanical energy into electric energy in both compression and releasing processes, and the time of power generation in a single force application is long, so that the effective power generation time in a single force application and the total effective power generation time of the power-generating insole are prolonged, and the power generation efficiency of the power-generating insole is improved.

### BRIEF DESCRIPTION OF THE DRAWINGS

FIG. 1 is a schematic structural view of a power-generating insole according to an embodiment of the present invention;
FIGS. 2-9 are schematic structural views of power-generating fabric structures of the power-generating insole shown in FIG. 1 according to various embodiments;
FIGS. 10-14 are schematic structural views of power-generating insoles according to various embodiments;
FIG. 15 is a flowchart of a method for manufacturing a power-generating insole according to an embodiment of the present invention;
FIG. 16 is a flowchart of a method for manufacturing a power-generating insole according to another embodiment of the present invention; and
FIG. 17 is a flowchart of a method for manufacturing a power-generating insole according to yet another embodiment of the present invention.

### DETAILED DESCRIPTION OF THE INVENTION

For ease of understanding the present application, the present application is illustrated in detail below in conjunction with figures and specific embodiments. It should be noted that when an element is referred to as being "secured to" another element, it can be direct on the another element, or one or more intervening elements may be present therebetween. When an element is referred to as being "connected to" another element, it can be direct connected to the another element, or one or more intervening elements may be present therebetween. As used herein, the terms "vertical", "horizontal", "left", "right", "inner", "outer" and the like are for illustrative purposes only and merely to convey a substantial positional relationship, for example, for "vertical", it is within the scope of the present description as "vertical" if a positional relationship is not strictly vertical for a certain purpose, but is substantially vertical, or utilizes vertical characteristics.

Unless defined otherwise, all technical and scientific terms used herein have the same meanings as commonly understood by one of ordinary skill in the art of the present application. The terms used in the description of the present application are for the purpose of describing particular embodiments only and are not intended to be limiting of the present application. As used herein, the term "and/or" comprises any and all combinations of one or more of the associated listed items.

Furthermore, the technical features referred to in various embodiments of the present application described below may be combined with each other as long as they do not constitute a conflict with each other.

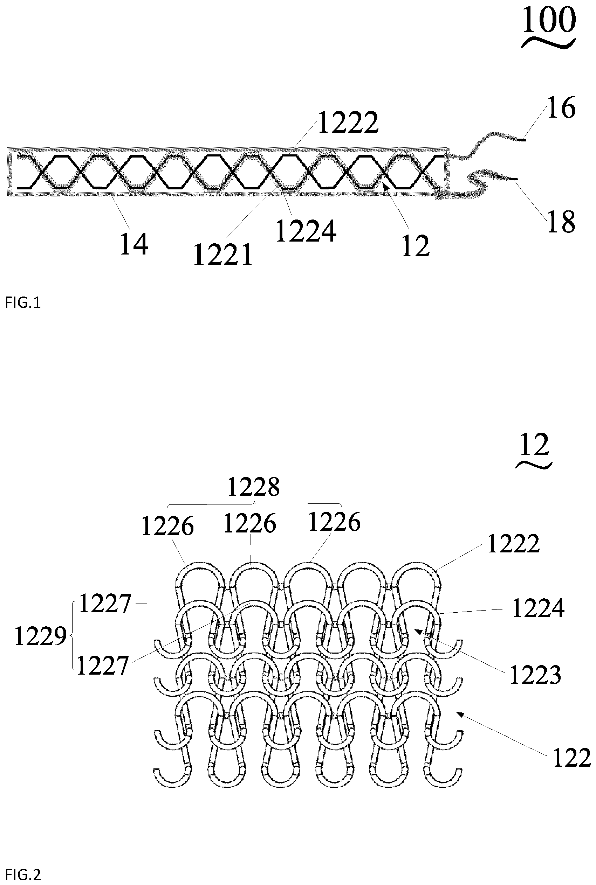

Referring to FIGS. 1 and 2 together, a power-generating insole 100 comprises a power-generating fabric structure 12, a waterproof shield 14, a first flexible electrode 16 and a second flexible electrode 18. The waterproof shield 14 coats the power-generating fabric structure12, one end of the first flexible electrode 16 and one end of the second flexible electrode 18 are respectively connected to the power-generating fabric structure 12, and the other end of the first flexible electrode 16 and the other end of the second flexible electrode 18 are respectively connected to a load.

In this embodiment, the power-generating fabric structure 12 comprises a plurality of conductive fabric layers 122, and each conductive fabric layer 122 is laminated in parallel to another conductive fabric layer 122.

Each conductive fabric layer 122 comprises a first conductive yarn 1222 and a second conductive yarn 1224. The first conductive yarn 1222 and the second conductive yarn 1224 are interwoven, and the first conductive yarn 1222 and the second conductive yarn 1224 are made of conductive materials; when an external force is applied, the first conductive yarn 1222 and the second conductive yarn 1224 can fully contact with each other; and when the external force is removed, the first conductive yarn 1222 and the second conductive yarn 1224 can recover and separate from each other.

The first conductive yarn 1222 and the second conductive yarn 1224 are interwoven to form the conductive fabric layer 122. The first conductive yarn 1222 of each conductive fabric layer 122 is connected to the first conductive yarn 1222 of an adjacent conductive fabric layer 122, and the second conductive yarn 1224 of each conductive fabric layer 122 is connected to the second conductive yarn 1224 of an adjacent conductive fabric layer 122.

The first conductive yarn 1222 of each conductive fabric layer 122 is bent in a first direction to form a plurality of cone-like first fabric units 1226, and the plurality of first fabric units 1226 are sequentially connected in the first direction to form a first fabric structure 1228.

The second conductive yarn 1224 of each conductive fabric layer 122 is bent in the first direction to form a plurality of cone-like second fabric units 1227, and the plurality of second fabric units 1227 are sequentially connected in the first direction to form a second fabric structure 1229.

A plurality of first fabric structures 1228 and a plurality of second fabric structures 1229 are sequentially interwoven in a second direction to form the conductive fabric layer 122. A plurality of first gaps 1223 are formed at positions where each first fabric structure 1228 and each second fabric structure 1229 are interwoven in the second direction. The first gaps 1223 may prolong the time of contact between the first conductive yarn 1222 and the second conductive yarn 1224 of each conductive fabric layer under the external force; also, the first gaps 1223 may prolong the time taken for the first conductive yarn 1222 and the second conductive yarn 1224 of each conductive fabric layer to separate from each other after the external force is removed, so that the effective power generation time in a single force application and the total effective power generation time of the power-generating insole are prolonged, and the power generation efficiency of the power-generating insole is improved.

The plurality of conductive fabric layers 122 are sequentially laminated to eventually form the power-generating fabric structure 12 of three-dimensional porous network structure, and the first direction and the second direction form a preset angle of more than 0 degree and less than 180 degrees.

When an external force is applied to the power-generating insole 100, the power-generating fabric structure 12 of the power-generating insole 100 can be compressed or bent, and the first conductive yarn 1222 and the second conductive yarn 1224 in each power-generating fabric structure 122 closely contact with each other; and the first conductive yarn 1222 of each conductive fabric layer 122 closely contacts with the second conductive yarn 1224 of an adjacent conductive fabric layer 122; and the second conductive yarn 1224 of each conductive fabric layer 122 closely contacts with the first conductive yarn 1222 of an adjacent conductive fabric layer 122.

When the external force applied to the power-generating insole 100 is removed, the power-generating fabric structure 12 of the power-generating insole 100 can recover resiliently, and the first conductive yarn 1222 and the second conductive yarn 1224 in each conductive fabric layer 122 separate from each other; and each conductive fabric layer 122 separates from an adjacent conductive fabric layer 122.

When the external force is repeatedly applied to and removed from the power-generating insole 100, the first conductive yarn 1222 and the second conductive yarn 1224 of each conductive fabric layer 122 will successively contact with and separate from each other; and the first conductive yarn 1222 of each conductive fabric layer 122 and the second conductive yarn 1224 of the adjacent conductive fabric layer 122 will successively contact with and separate from each other; and the second conductive yarn 1224 of each conductive fabric layer 122 and the first conductive yarn 1222 of the adjacent conductive fabric layer 122 will successively contact with and separate from each other; and due to the contact and separation between the first conductive yarn 1222 and the second conductive yarn 1224, the first conductive yarn 1222 can provide both the functions of contact electrification and electrostatic induction, so that a dynamic potential difference is generated between the first conductive yarn 1222 and the second conductive yarn 1224, and in order to achieve potential balance, free electrons in the first conductive yarn 1222 and the second conductive yarn 1224 will continuously migrate back and forth through the load to generate a current, thereby continuously outputting electric energy to the outside.

Meanwhile, with the structure design that the plurality of conductive fabric layers 122 in the power-generating insole 100 are sequentially laminated and the structure design that the first conductive yarn 1222 and the second conductive yarn 1224 in each conductive fabric layer 122 are interwoven, the effective contact area of an insulating material (i.e., the second conductive yarn 1224) and a conductive material (i.e., the first conductive yarn 1222) is greatly increased, so that the efficiency of converting mechanical energy into electric energy is increased, and the power generation efficiency of the power-generating insole 100 is further improved.

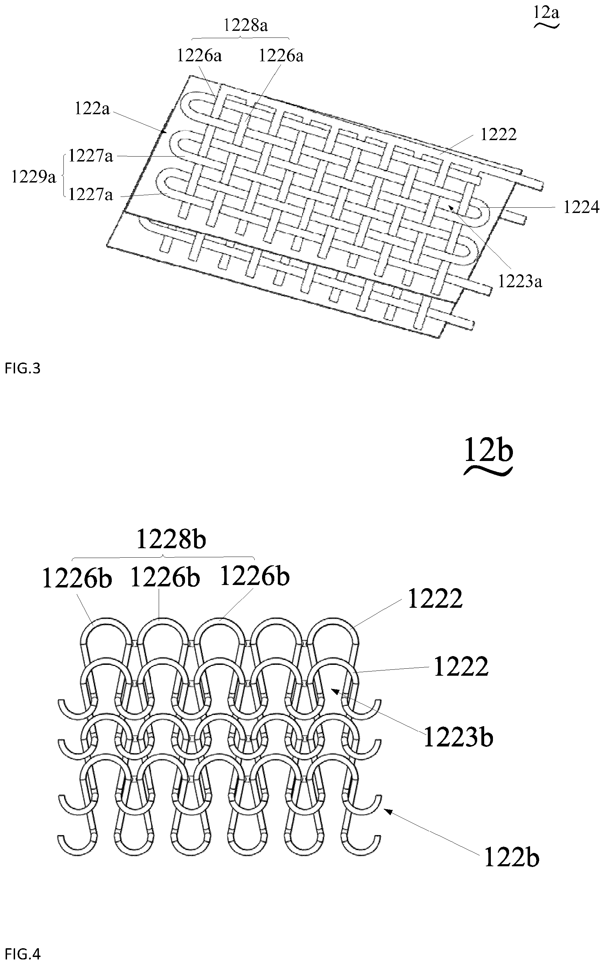

Referring to FIG. 3, in some embodiments, the power-generating fabric structure 12a is substantially the same as the power-generating fabric structure 12, except that the first conductive yarn 1222 of each conductive fabric layer 122a is bent in a first direction to form a plurality of elongated first fabric units 1226a, and the plurality of first fabric units 1226a are sequentially connected in a second direction to form a first fabric structure 1228a.

The second conductive yarn 1224 of each conductive fabric layer 122a is bent in a second direction to form a plurality of elongated second fabric units 1227a, and the plurality of second fabric units 1227a are sequentially connected in the first direction to form a second fabric structure 1229a.

A plurality of first gaps 1223a are formed at positions where the plurality of first fabric units 1226a and the plurality of second fabric units 1227a are interwoven.

The first fabric structure 1228a and the second fabric structure 1229a are interwoven to eventually form the conductive fabric layer 122a.

Referring to FIG. 4, in some embodiments, the power-generating fabric structure 12b is substantially the same as the power-generating fabric structure 12, except that each conductive fabric layer 122b comprises only a plurality of first conductive yarns 1222. The plurality of first conductive yarns 1222 are interwoven with each other to form the conductive fabric layer 122b. The first conductive yarn 1222 of each conductive fabric layer 122b is connected to the first conductive yarn 1222 of an adjacent conductive fabric layer 122b.

The first conductive yarn 1222 of each conductive fabric layer 122b is bent in a first direction to form a plurality of cone-like first fabric units 1226b, and the plurality of first fabric units 1226b are sequentially connected in the first direction to form first fabric structures 1228b.

A plurality of first fabric structures 1228b are sequentially interwoven in a second direction to eventually form the conductive fabric layer 122b. A plurality of first gaps 1223b are formed at positions where the plurality of first fabric structures 1228b are interwoven in the second direction.

The power-generating fabric structure 12b is formed by interweaving only one type of conductive yarn, and thus is suitable for large-scale batch production and cutting by machines.

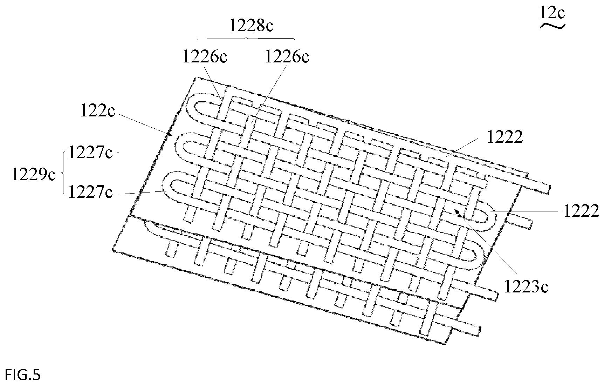

Referring to FIG. 5, in some embodiments, the power-generating fabric structure 12c is substantially the same as the power-generating fabric structure 12a, except that each conductive fabric layer 122c comprises only a plurality of first conductive yarns 1222.

The first conductive yarn 1222 of each conductive fabric layer 122c is bent in a first direction to form a plurality of elongated first fabric units 1226c, and the plurality of first fabric units 1226c are sequentially connected in a second direction to form a first fabric structure 1228c.

The first conductive yarn 1222 of each conductive fabric layer 122c is bent in a second direction to form a plurality of elongated second fabric units 1227c, and the plurality of second fabric units 1227c are sequentially connected in the first direction to form a second fabric structure 1229c.

Each first fabric structure 1228c and an adjacent second fabric structure 1229c are interwoven to eventually form the conductive fabric layer 122c. A plurality of first gaps 1223c are formed at positions where a plurality of first fabric structures 1228c and a plurality of second fabric structures 1229c are interwoven.

The power-generating fabric structure 12c is formed by interweaving only one type of conductive yarn, and thus is suitable for large-scale batch production and cutting by machines.

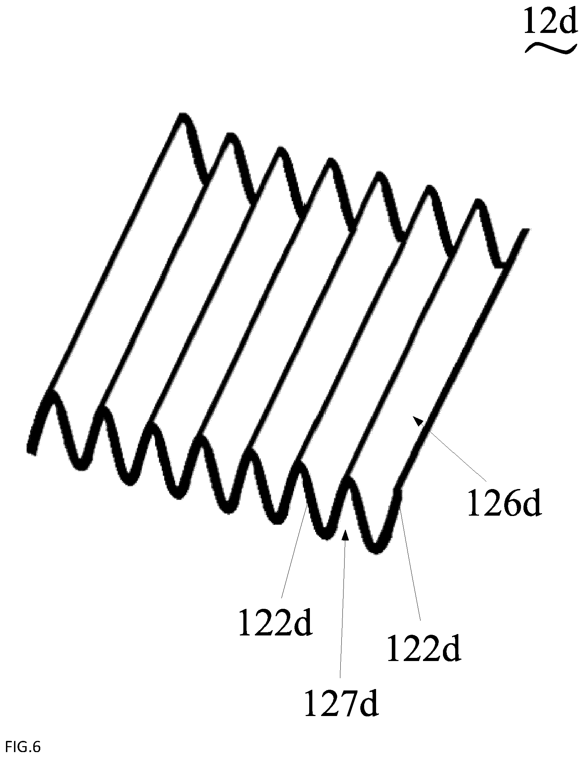

Referring to FIG. 6, in some embodiments, the power-generating fabric structure 12d is substantially the same as the power-generating fabric structure 12, except that the power-generating fabric structure 12d is formed by stacking one conductive fabric layer 122, the power-generating fabric structure 12d comprises a plurality of V-shaped stacking units 122d, and each stacking unit 122d is connected to an adjacent stacking unit 122d in a first direction. Each stacking unit 122d is provided with an elongated first folding groove 126d. Each stacking unit 122d and an adjacent stacking unit 122d form an elongated second folding groove 127d.

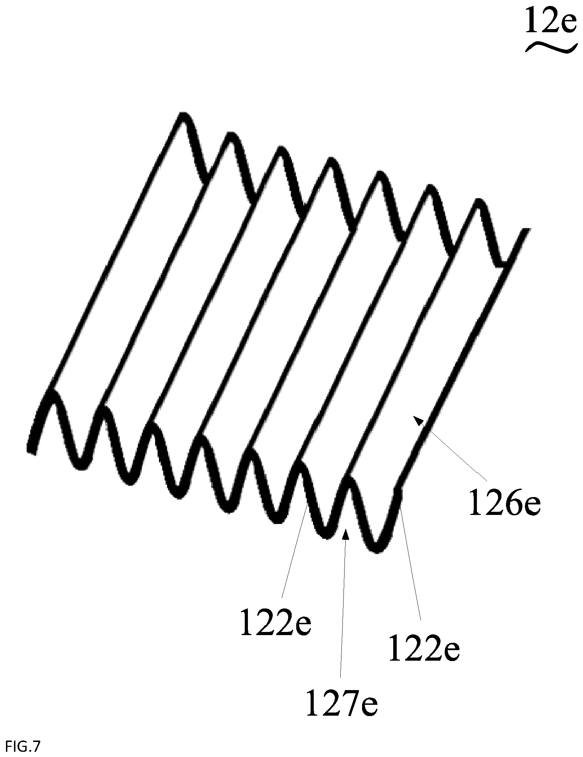

Referring to FIG. 7, in some embodiments, the power-generating fabric structure 12e is substantially the same as the power-generating fabric structure 12a, except that the power-generating fabric structure 12e is formed by stacking one conductive fabric layer 122a, the power-generating fabric structure 12e comprises a plurality of V-shaped stacking units 122e, and each stacking unit 122e is connected to an adjacent stacking unit 122e in a first direction. Each stacking unit 122e is provided with an elongated first folding groove 126e. Each stacking unit 122e and an adjacent stacking unit 122e form an elongated second folding groove 127e.

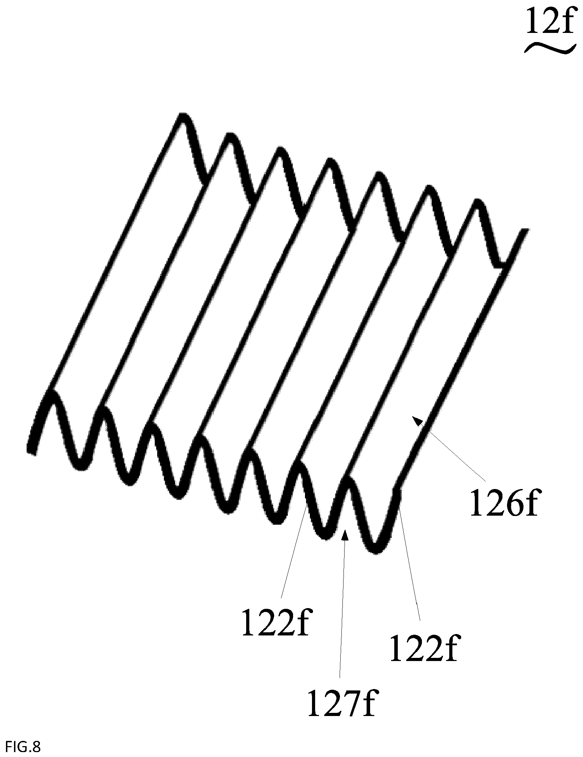

Referring to FIG. 8, in some embodiments, the power-generating fabric structure 12f is substantially the same as the power-generating fabric structure 12b, except that the power-generating fabric structure 12f is formed by stacking one conductive fabric layer 122b, the power-generating fabric structure 12f comprises a plurality of V-shaped stacking units 122f, and each stacking unit 122f is connected to an adjacent stacking unit 122f in a first direction. Each stacking unit 122f is provided with an elongated first folding groove 126f. Each stacking unit 122f and an adjacent stacking unit 122f form an elongated second folding groove 127f.

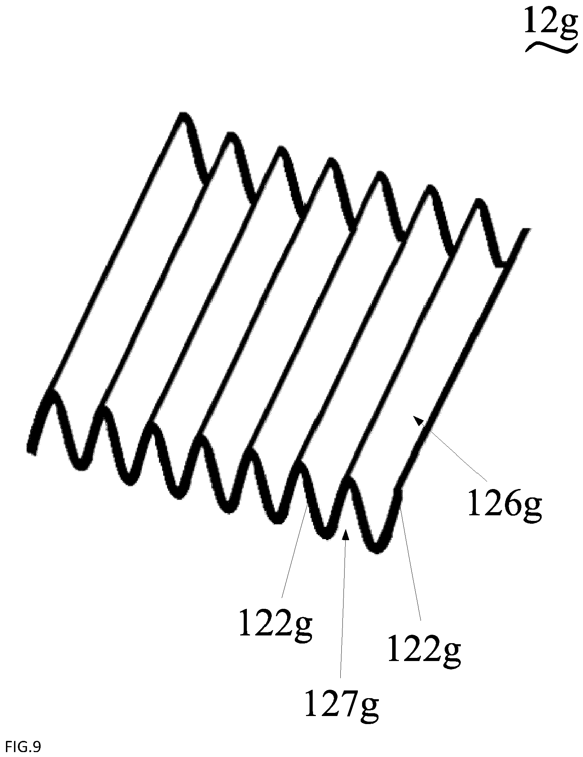

Referring to FIG. 9, in some embodiments, the power-generating fabric structure 12g is substantially the same as the power-generating fabric structure 12c, except that the power-generating fabric structure 12g is formed by stacking one conductive fabric layer 122c, the power-generating fabric structure 12g comprises a plurality of V-shaped stacking units 122g, and each stacking unit 122g is connected to an adjacent stacking unit 122g in a first direction. Each stacking unit 122g is provided with an elongated first folding groove 126g. Each stacking unit 122g and an adjacent stacking unit 122g form an elongated second folding groove 127g.

It will be appreciated that, in some embodiments, the stacking units 122d, 122e, 122f and 122g may be provided in any other shape as desired, such as wave, arc, quadrangle, etc., as long as the stacking units can be compressed by an external force and can be recovered to a three-dimensional structure after the external force is released, which are all within the scope of the present application.

In this embodiment, the first conductive yarn 1222 has a diameter less than that of the second conductive yarn 1224. According to the above design, the effective contact area between the first conductive yarn 1222 and the second conductive yarn 1224 can be greatly increased, and the contact electrification effect and the electrostatic induction effect of the first conductive yarn 1222 are favorably strengthened, so that the efficiency of converting mechanical energy into electric energy is increased, and the power generation efficiency of the power-generating insole is further improved.

The first conductive yarn 1222 is a yarn that may be made of a conductive material such as metal materials, carbon materials, conductive polymers, conductive oxides, etc. The yarn is preferably made of a conductive material such as silver-plated materials, copper-plated materials, aluminum-plated materials, nickel-plated materials, and copper-nickel-plated materials, etc.

The second conductive yarn 1224 comprises a conductive yarn and an insulating cladding 1221, and the insulating cladding 1221 coats an outer surface of the conductive yarn.

The second conductive yarn 1224 is a yarn that may be made of a conductive material such as metal materials, carbon materials, conductive polymers, conductive oxides, etc. The yarn is preferably made of a conductive material such as silver-plated materials, copper-plated materials, aluminum-plated materials, nickel-plated materials, and copper-nickel-plated materials, etc.

It will be appreciated that, in some embodiments, any one of the conductive fabric layers 122, 122a, 122b, 122c, 122d, 122e, 122f or 122g described above comprises a plurality of first conductive yarns 1222 and a plurality of second conductive yarns 1224. The insulating cladding 1221 may be made of any non-conductive insulating material, preferably insulating polymeric materials such as polydimethylsiloxane and its modified materials, polyethylene, polypropylene, thermoplastic elastomer, etc. The insulating cladding1221 may be prepared by coating with a polymer solution or coating with a polymer melt.

In some embodiments, the insulating cladding 1221 is an insulating yarn layer wrapped around an outer surface of the second conductive yarn 1224 using a spinning technique, and the yarn layer is preferably made of a fiber material such as polyethylene, polypropylene, polyimide, polyacrylonitrile, polytetrafluoroethylene, polyamide, polyester fiber, etc.

In some embodiments, the insulating cladding 1221 comprises an insulating yarn layer and an insulating polymer outer layer, the insulating polymer outer layer is provided on an outer surface of the insulating yarn layer, and the insulating yarn layer and the insulating polymer outer layer together form the insulating cladding 1221 having a fiber-reinforced polymer composite structure.

The insulating yarn layer may be made by spinning a material selected from natural cotton, modified viscose fiber and wool fiber with high absorbability. The insulating polymer outer layer is preferably made of an insulating polymeric material such as polydimethylsiloxane and its modified materials, polyethylene, polypropylene, thermoplastic elastomer, etc.

In this embodiment, one end of the first conductive yarn 1222 of one of the conductive fabric layers 122 extends out of the waterproof shield 14 to serve as the first flexible electrode 16. One end of the second conductive yarn 1224 of one of the conductive fabric layers 122 extends out of the waterproof shield 14 to serve as the second flexible electrode 18. Both outer surfaces of the first flexible electrode 16 and the second flexible electrode 18 are coated with the waterproof shield 14.

The waterproof shield 14 has a waterproof property, and the power-generating insole can be washed with water and dried without loosing or degrading the power generation property, thereby being convenient to maintain.

The waterproof shield 14 is resilient and flexible, so that the resilience of the power-generating insole is further increased, which is beneficial to improve the power generation efficiency of the power-generating insole.

The waterproof shield 14 may be made of polydimethylsiloxane and its modified silicone rubber, polyurethane, polystyrene block copolymer thermoplastic elastomer and hydrogenated polystyrene block copolymer thermoplastic elastomer, and may also be made of polyolefin thermoplastic and epoxy resin thermosetting plastic.

The waterproof shield 14 may be obtained by directly dipping or coating the power-generating fabric structure with a waterproof resin precursor followed by curing, and may also be obtained by coating the power-generating fabric structure with a thermoplastic film followed by thermofixation. The method for manufacturing the waterproof shield 14 described above is also applicable to the first flexible electrode 16 and the second flexible electrode 18.

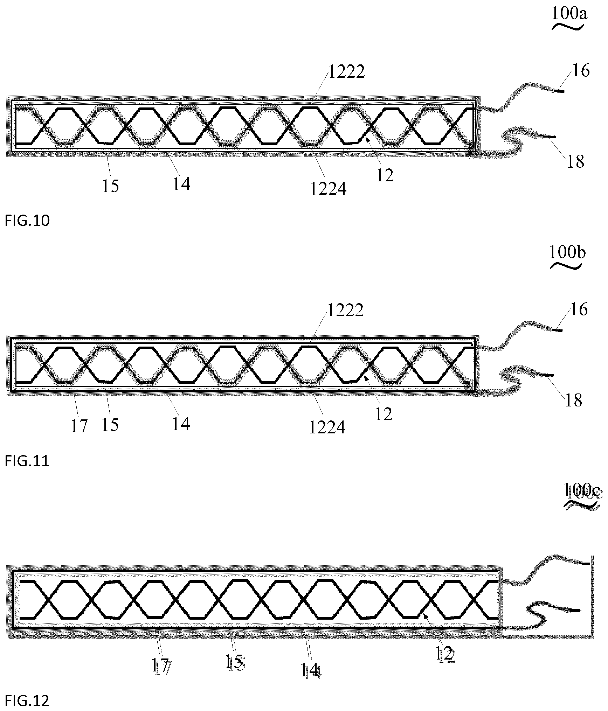

Referring to FIG. 10, a power-generating insole 100a provided in some embodiments of the present invention is substantially the same as the power-generating insole 100 shown in FIG. 1, except that, the power-generating insole 100a further comprises a first insulating layer 15, and the first insulating layer 15 is disposed between the power-generating fabric structure 12 and the waterproof shield 14, and coats an outer surface of the power-generating fabric structure. When an external force is applied to the power-generating insole 100a, the first insulating layer 15 and second conductive yarn 1224 contact with the first conductive yarn 1222, and when the external force applied to the power-generating insole 100a is removed, the first insulating layer 15 and the second conductive yarn 1224 separate from the first conductive yarn 1222. Due to the contact and separation between the first conductive yarn 1222 and the first insulating layer 15 as well as the second conductive yarn 1224, the first conductive yarn 1222 can provide both the functions of contact electrification and electrostatic induction, so that a dynamic potential difference is generated between the first conductive yarn 1222 and the second conductive yarn 1224. According to the above design, the contact friction is enhanced by the first insulating layer 15, so that the power generation energy density per unit volume can be effectively increased, and the power generation efficiency of the power-generating insole 100a can be improved.

The first insulating layer 15 may be made of any electrically insulating material, preferably polyethylene, polypropylene, polyimide, polyacrylonitrile, polytetrafluoroethylene, polyamide and polyester film layers.

Referring to FIG. 11, a power-generating insole 100b provided in some embodiments of the present invention is substantially the same as the power-generating insole 100a shown in FIG. 10, except that, the power-generating insole 100b further comprises a first conductive layer 17, the first conductive layer 17 is disposed between the first insulating layer 15 and the waterproof shield 14, and coats an outer surface of the first insulating layer 15, and the first conductive layer 17 is connected to the second conductive yarn 1224. The first conductive layer 17 serves as an electrode capable of generating free electrons, and based on the electrostatic induction effect, when an external force extrudes the power-generating insole or when the external force is removed, the power-generating insole generates a current via which electric energy is continuously output to an external load.

The first conductive layer17 may be made of a conductive material such as conductive metal materials, conductive carbon materials, conductive polymers, conductive oxides, etc. The materials of the first conductive yarn 1222, the second conductive yarn 1224 and the first conductive layer 17 may be either same or different.

Referring to FIG. 12, a power-generating insole 100c provided in some embodiments of the present invention is substantially the same as the power-generating insole 100b shown in FIG. 11, except that, the power-generating fabric structure 12 in the power-generating insole 100c is manufactured by interweaving only the first conductive yarn 1222. Due to the contact and separation between the first conductive yarn 1222 and the first insulating layer 15, the first conductive yarn 1222 can provide both the functions of contact electrification and electrostatic induction. The first conductive layer 17 serves as an electrode capable of generating free electrons, and based on the electrostatic induction effect, when an external force extrudes the power-generating insole or when the external force is removed, a dynamic potential difference is generated between the first conductive yarn 1222 and the first conductive layer 17, and electrons are driven to flow to generate a current via which electric energy is continuously output to an external load.

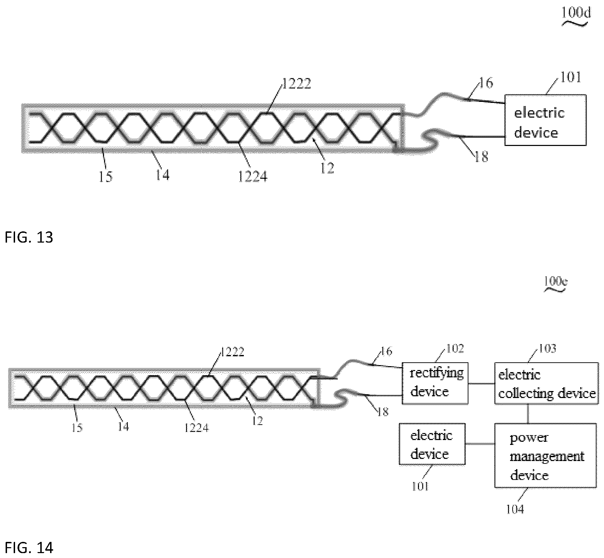

Referring to FIG. 13, a power-generating insole 100d provided in some embodiments of the present invention is substantially the same as the power-generating insole 100b shown in FIG. 12, except that, the power-generating insole 100d further comprises an electric device 101, one end of the electric device 101 is connected to the first flexible electrode 16, the other end of the electric device 101 is connected to the second flexible electrode 18, and electric energy generated by the power-generating insole 100d is used for driving the electric device 101. The electric device 101 refers to a device which is driven by electric energy, such as an LED light, a counter, a sensor, an electronic watch, etc.

Referring to FIG. 14, a power-generating insole 100e provided in some embodiments of the present invention is substantially the same as the power-generating insole 100d shown in FIG. 13, except that, the power-generating insole 100e further comprises a rectifying device 102, an electric collecting device 103 and a power management device 104, one end of the rectifying device 102 is connected to the first flexible electrode 16, the other end of the rectifying device 102 is connected to the second flexible electrode 18, the rectifying device 102 is connected to the electric collecting device 103, and a current generated by the power-generating insole 100e is rectified and filtered by the rectifying device 102 and then stored in the electric collecting device 103. The electric collecting device 103 is a capacitor or a lithium ion battery, a storage battery, etc. The power management device 104 is connected to the electric collecting device 103, and is used for outputting the electric energy stored in the electric collecting device 103, controlling the magnitude of an output current, and controlling the on/off of the output current. The power management device 104 is connected to the electric device 101 and is used for providing electric energy to the electric device 101.

It will be appreciated that, the power-generating fabric structure 12, 12a, 12b, 12c, 12d, 12e, 12f or 12g in any one of the embodiments described above may be applied to the power-generating insole 100, 100a, 100b, 100c, 100d or 100e in any one of the embodiments described above.

The power-generating insole 100, 100a, 100b, 100c, 100d or 100e in any one of the embodiments described above has a shape of a full sole.

In some embodiments, the power-generating insole 100, 100a, 100b, 100c, 100d, or 100e in any one of the embodiments described above has a shape of a rear-half sole. In some embodiments, the power-generating insole 100, 100a, 100b, 100c, 100d, or 100e in any one of the embodiments described above has a shape of a front-half sole. An embodiment of the invention also provides a power-generating blanket comprising the power-generating insole 100, 100a, 100b, 100c, 100d or 100e in any one of the embodiments described above.

An embodiment of the invention also provides a power-generating sock comprising the power-generating insole 100, 100a, 100b, 100c, 100d or 100e in any one of the embodiments described above.

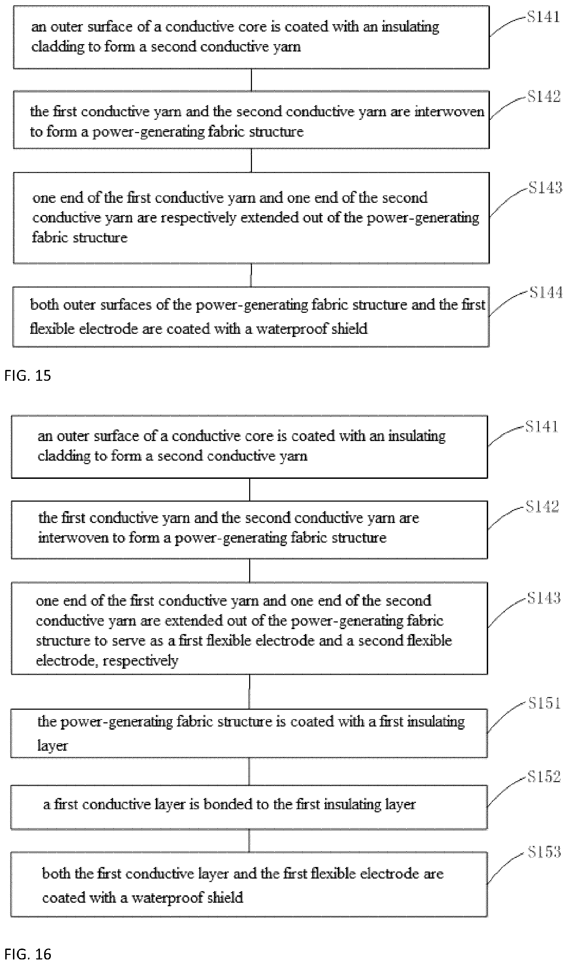

It will be appreciated that, the power-generating insole 100, 100a, 100b, 100c, 100d or 100e in any one of the embodiments of the present invention described above is applicable to any scenarios involving an external force or motions or may be used as a self-powered flexible platform to combine and integrate with other electronic devices. Referring to FIG. 15, one embodiment of the present invention provides a method for manufacturing a power-generating insole, and it should be noted that, the foregoing explanations for the embodiments of the power-generating insole are also applicable to the method for manufacturing the power-generating insole in this embodiment, and will not be described in detail herein in order to avoid redundancy. It should be noted that, in the various embodiments described below, no definite order exists between the steps described below, and one of ordinary skill in the art would understand from the description of the embodiments of the present application that in different embodiments, the steps described below may be performed in different orders, i.e., may be performed in parallel, or may be performed interchangeably, etc; and in different embodiments, some of the steps described below may also be omitted or substituted.

The method for manufacturing the power-generating insole comprises the following steps:
S141: an outer surface of a conductive core is coated with an insulating cladding 1221 to form a second conductive yarn 1224.

Specifically, a silver-plated conductive yarn is used as the conductive core, and the insulating cladding 1221 is made of polypropylene (PP) short fiber. The second conductive yarn 1224 is formed by wrapping PP short fiber around the surface of the silver-plated conductive yarn using the wrapped yarn technology in the spinning technology, and the size of a second conductive yarn 1224 can be controlled and adjusted according to the PP yarn feeding amount, wherein the conductive core has a fineness of 100D, and the second conductive yarn 1224 has a fineness of 500D.

In some embodiments, a silver-plated conductive yarn having a fineness of 100D is used as the conductive core, and the insulating cladding 1221 is made of polyacrylonitrile (PAN) short fiber. The second conductive yarn 1224 is formed by wrapping PAN short fiber around the surface of the silver-plated conductive yarn using the wrapped yarn technology in the spinning technology.

In some embodiments, after S141, the method further comprises a step that a reinforcing composite layer is formed on an outer surface of the second conductive yarn 1224.

Specifically, the second conductive yarn 1224 is immersed in a prepared polydimethylsiloxane (PDMS) precursor solution, and the insulating cladding 1221 as a porous fiber sheath will absorb and retain PDMS, the second conductive yarn 1224 is then put into an oven for curing and crosslinking, and finally the reinforcing composite layer is formed on the second conductive yarn 1224. The reinforcing composite layer allows the second conductive yarn 1224 to obtain better strength and insulativity, and makes the second conductive yarn 1224 easier to weave.

S142: the first conductive yarn 1222 and the second conductive yarn 1224 are interwoven to form a power-generating fabric structure.

Specifically, a silver-plated conductive yarn is used as the first conductive yarn 1222, and the first conductive yarn 1222 has a fineness of 300D. The first conductive yarns 1222 and the second conductive yarn 1224 are then interwoven in a commercial textile machine such as a knitting machine to obtain an insole-shaped power-generating fabric structure which is resilient and capable of recovering, and the conductive cores in the first conductive yarn 1222 and the second conductive yarn 1224 are not electrically connected. The first conductive yarn 1222 accounts for more proportions than the second conductive yarn 1224 in the power-generating fabric structure. To adjust and increase the proportions of the first conductive yarn 1222 in the power-generating fabric structure, one second conductive yarn 1224 may be interwoven with a plurality of first conductive yarns 1222 in weaving.

S143: one end of the first conductive yarn 1222 and one end of the second conductive yarn 1224 are respectively extended out of the power-generating fabric structure such that the part, extending out of the power-generating fabric structure, of the first conductive yarn 1222 serves as a first flexible electrode 16 and the part, extending out of the power-generating fabric structure, of the second conductive yarn 1224 serves as a second flexible electrode 18.

S144: both outer surfaces of the power-generating fabric structure and the first flexible electrode 16 are coated with a waterproof shield 14.

Referring to FIG. 16, in some embodiments, S144 may be substituted by the following S151, S152, and S153:
S151: the power-generating fabric structure is coated with a first insulating layer 15.

Specifically, the power-generating fabric structure, which is formed by interweaving the first conductive yarn 1222 and the second conductive yarn 1224, is covered with a PP film as the first insulating layer 15.

S152: a first conductive layer 17 is bonded to the first insulating layer 15.

Specifically, the first conductive layer 17 is made of a fabric-based conductive tape, the first conductive layer 17 is tightly bonded to the first insulating layer 15, and the conductive core in the second conductive yarn 1224 is connected to the first conductive layer 17.

S153: both the first conductive layer 17 and the first flexible electrode 16 are coated with a waterproof shield 14.

In some embodiments, S151 and S152 may be omitted.

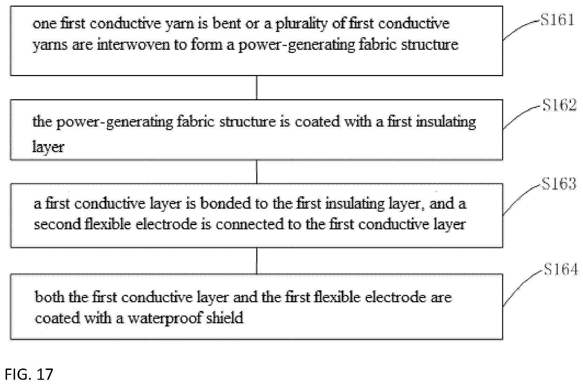

Referring to FIG. 17, one embodiment of the present invention provides a method for manufacturing a power-generating insole, and it should be noted that, the foregoing explanations for the embodiments of the power-generating insole are also applicable to the method for manufacturing the power-generating insole in this embodiment, and will not be described in detail herein in order to avoid redundancy. It should be noted that, in the various embodiments described below, no definite order exists between the steps described below, and one of ordinary skill in the art would understand from the description of the embodiments of the present application that in different embodiments, the steps described below may be performed in different orders, i.e., may be performed in parallel, or may be performed interchangeably, etc; and in different embodiments, some of the steps described below may also be omitted or substituted.

The method for manufacturing the power-generating insole comprises the following steps:
S161: one first conductive yarn 1222 is bent or a plurality of first conductive yarns 1222 are interwoven to form a power-generating fabric structure, and one end of the first conductive yarn 1222 is extended out of the power-generating fabric structure such that the part, extending out of the power-generating fabric structure, of the first conductive yarn 1222 serves as a first flexible electrode 16.
S162: the power-generating fabric structure is coated with a first insulating layer 15. Specifically, the power-generating fabric structure, which is formed by interweaving the first conductive yarns 1222, is covered with a PP film as the first insulating layer 15.
S163: a first conductive layer 17 is bonded to the first insulating layer 15, and a second flexible electrode 18 is connected to the first conductive layer 17.
S164: both the first conductive layer 17 and the first flexible electrode 16 are coated with a waterproof shield 14.

Compared with the prior art, the power-generating insole 100, 100a, 100b, 100c or 100d provided by the present application is advantageous in that, with the design that the first conductive yarn and the second conductive yarn are interwoven to form the power-generating fabric structure of three-dimensional porous network structure, when an external force is applied to the power-generating insole, contact friction and sliding friction are generated between the first conductive yarn and the second conductive yarn in a limited three-dimensional space, and when the external force is removed, the first conductive yarn and the second conductive yarn can recover and separate from each other. The power-generating insole can effectively convert mechanical energy into electric energy in both compression and releasing processes, and the time of power generation in a single force application is long, so that the effective power generation time in a single force application and the total effective power generation time of the power-generating insole are prolonged, and the power generation efficiency of the power-generating insole is improved.

Finally, it should be noted that: the above embodiments are merely illustrative of the technical schemes of the present application and are not intended to be limiting thereof; under the principles of the present application, the above embodiments or technical features in different embodiments may also be combined, the steps may be performed in any order, and there are many other variations of the different aspects of the present application described above, which are not provided in detail for simplicity and clarity; although the present application has been described in detail with reference to the above embodiments, those skilled in the art will appreciate that: the technical schemes of the above-mentioned embodiments can still be modified, or some of the technical features thereof can be equivalently replaced; and these modifications and substitutions do not depart from the scope of the embodiments of the present application.

## Claims

1. A power-generating insole, **characterized by** comprising: a power-generating fabric structure and a waterproof shield;
the waterproof shield coats an outer surface of the power-generating fabric structure; the power-generating fabric structure comprises a first conductive yarn and a second conductive yarn, and the first conductive yarn and the second conductive yarn are interwoven together;
the first conductive yarn is made of a conductive material; the second conductive yarn comprises a conductive core and an insulating cladding, the conductive core is made of a conductive material, the insulating cladding is made of an insulating material, and the insulating cladding coats an outer surface of the conductive core;
when an external force is applied to the power-generating insole, contact friction is generated between the first conductive yarn and the second conductive yarn in the power-generating fabric structure; and when the external force applied to the power-generating insole is removed, the first conductive yarn and the second conductive yarn separate from each other, and a potential difference is generated between the first conductive yarn and the second conductive yarn when contact friction is successively generated between the first conductive yarn and the second conductive yarn.

2. The power-generating insole according to claim 1, **characterized in that**,
the power-generating insole further comprises a first insulating layer, and the first insulating layer is disposed between the power-generating fabric structure and the waterproof shield, and the first insulating layer coats the outer surface of the power-generating fabric structure.

3. The power-generating insole according to claim 2, **characterized in that**,
the power-generating insole further comprises a first conductive layer, and the first conductive layer is disposed between the first insulating layer and the waterproof shield, and the first conductive layer is connected to the second conductive yarn.

4. The power-generating insole according to claim 1, **characterized in that**,
the power-generating fabric structure comprises a plurality of conductive fabric layers which are arranged in lamination;
each conductive fabric layer comprises the first conductive yarn and the second conductive yarn, and the first conductive yarn and the second conductive yarn are interwoven to form the conductive fabric layer;
the first conductive yarn of each conductive fabric layer is connected to the first conductive yarn of an adjacent conductive fabric layer; and
the second conductive yarn of each conductive fabric layer is connected to the second conductive yarn of an adjacent conductive fabric layer.

5. The power-generating insole according to claim 4, **characterized in that**,
the first conductive yarn of each conductive fabric layer is bent in a first direction to form a plurality of first fabric units, and the plurality of first fabric units are sequentially connected in the first direction to form a first fabric structure;
the second conductive yarn of each conductive fabric layer is bent in the first direction to form a plurality of second fabric units, and the plurality of second fabric units are sequentially connected in the first direction to form a second fabric structure; and
a plurality of first fabric structures and a plurality of second fabric structures are sequentially interwoven in a second direction to form the conductive fabric layer, and the first direction and the second direction form a preset angle of more than 0 degree and less than 180 degrees.

6. The power-generating insole according to claim 5, **characterized in that**,
a plurality of first gaps are formed at positions where the plurality of first fabric structures and the plurality of second fabric structures are interwoven.

7. The power-generating insole according to claim 4, **characterized in that**,
the first conductive yarn of each conductive fabric layer is bent in a first direction to form a plurality of first fabric units, and the plurality of first fabric units are sequentially connected in a second direction to form a first fabric structure;
the second conductive yarn of each conductive fabric layer is bent in the second direction to form a plurality of second fabric units, the plurality of second fabric units are sequentially connected in the first direction to form a second fabric structure, and the first direction and the second direction form a preset angle of more than 0 degree and less than 180 degrees; and
the first fabric structure and the second fabric structure are interwoven to form the conductive fabric layer.

8. The power-generating insole according to claim 7, **characterized in that**,
a plurality of first gaps are formed at positions where the plurality of first fabric units and the plurality of second fabric units are interwoven.

9. The power-generating insole according to claim 1, **characterized in that**,
the power-generating fabric structure comprises a plurality of stacking units, each stacking unit is of three-dimensional structure and comprises the first conductive yarn and the second conductive yarn; and
each stacking unit is sequentially connected to an adjacent stacking unit to form the power-generating fabric structure.

10. The power-generating insole according to claim 9, **characterized in that**,
each stacking unit is provided with a first folding groove; and
a second folding groove is formed at a joint of each stacking unit and an adjacent stacking unit.

11. The power-generating insole according to claim 1, **characterized in that**
the power-generating insole further comprises a first flexible electrode and a second flexible electrode, one end of the first flexible electrode is connected to the first conductive yarn, and the other end of the first flexible electrode is connected to a load; and
one end of the second flexible electrode is connected to the second conductive yarn, and the other end of the second flexible electrode is connected to the load.

12. The power-generating insole according to claim 11, **characterized in that**,
one end of the first conductive yarn extends out of the power-generating fabric structure, the part, extending out of the power-generating fabric structure, of the first conductive yarn serves as the first flexible electrode, and the waterproof shield coats an outer surface of the first flexible electrode; and
one end of the second conductive yarn extends out of the power-generating fabric structure, and the part, extending out of the power-generating fabric structure, of the second conductive yarn serves as the second flexible electrode.

13. The power-generating insole according to claim 1, **characterized in that**,
the power-generating insole further comprises a rectifying device, an electric collecting device and a power management device;
the first flexible electrode and the second flexible electrode are respectively connected to the rectifying device, and the rectifying device is used for rectifying and filtering a current generated by the power-generating insole;
the electric collecting device is connected to the rectifying device, and the electric collecting device is used for storing electric energy obtained by rectification of the rectifying device;
the power management device is connected to the electric collecting device, and the power management device is used for outputting the electric energy stored in the electric collecting device and controlling the magnitude of an output current; and
the current management device is used for connecting to the load.

14. A power-generating insole, **characterized by** comprising: a power-generating fabric structure, a first insulating layer and a waterproof shield;
the first insulating layer is disposed between the power-generating fabric structure and the waterproof shield; the first insulating layer coats an outer surface of the power-generating fabric structure; the waterproof shield coats the outer surface of the power-generating fabric structure;
the power-generating fabric structure comprises a first conductive yarn and a second conductive yarn, and the first conductive yarn and the second conductive yarn are interwoven together;
when an external force is applied to the power-generating insole, contact friction is generated between the first conductive yarn and the second conductive yarn as well as the first insulating layer in the power-generating fabric structure; when the external force applied to the power-generating insole is removed, the first conductive yarn and the second conductive yarn as well as the first insulating layer in the power-generating fabric structure separate from each other, and a potential difference is generated between the first conductive yarn and the second conductive yarn in the power-generating fabric structure when contact friction is successively generated between the first conductive yarn and the second conductive yarn as well as the first insulating layer in the power-generating fabric structure.

15. The power-generating insole according to claim 14, **characterized in that**
the power-generating insole further comprises a first flexible electrode and a second flexible electrode, one end of the first flexible electrode is connected to the first conductive yarn, and the other end of the first flexible electrode is used for connecting to a load; and
one end of the second flexible electrode is connected to the second conductive yarn, and the other end of the second flexible electrode is used for connecting to the load.

16. The power-generating insole according to claim 15, **characterized in that**
the power-generating insole further comprises a first conductive layer, and the first conductive layer is disposed between the first insulating layer and the waterproof shield, and the first conductive layer is connected to the second flexible electrode.

17. The power-generating insole according to claim 14, **characterized in that**
the power-generating fabric structure comprises a plurality of conductive fabric layers which are arranged in lamination;
each conductive fabric layer comprises at least one first conductive yarn; one first conductive yarn is bent to form the conductive fabric layer, or a plurality of first conductive yarns are interwoven to form the conductive fabric layer; and
the first conductive yarn of each conductive fabric layer is connected to the first conductive yarn of an adjacent conductive fabric layer.

18. The power-generating insole according to claim 17, **characterized in that**,
the first conductive yarn of each conductive fabric layer is bent in a first direction to form a plurality of first fabric units, and the plurality of first fabric units are sequentially connected in the first direction to form a first fabric structure;
a plurality of first fabric structures are sequentially interwoven in a second direction to form the conductive fabric layer, and the first direction and the second direction form a preset angle of more than 0 degree and less than 180 degrees.

19. The power-generating insole according to claim 18, **characterized in that**,
a plurality of first gaps are formed at positions where the plurality of first fabric structures are interwoven.

20. A method for manufacturing a power-generating insole, **characterized by** comprising:
coating an outer surface of a conductive core with an insulating cladding to form a second conductive yarn, the conductive core being made of a conductive material, the insulating cladding being made of an insulating material;
interweaving a first conductive yarn and the second conductive yarn to form a power-generating fabric structure, wherein the first conductive yarn being made of a conductive material;
respectively extending one end of the first conductive yarn and one end of the second conductive yarn out of the power-generating fabric structure such that the part, extending out of the power-generating fabric structure, of the first conductive yarn serves as a first flexible electrode and the part, extending out of the power-generating fabric structure, of the second conductive yarn serves as a second flexible electrode; and
coating both outer surfaces of the power-generating fabric structure and the first flexible electrode with the waterproof shield.

21. A method for manufacturing a power-generating insole, **characterized by** comprising:
coating an outer surface of a conductive core with an insulating cladding to form a second conductive yarn, the conductive core being made of a conductive material, the insulating cladding being made of an insulating material;
interweaving a first conductive yarn and the second conductive yarn to form a power-generating fabric structure, the first conductive yarn being made of conductive material;
respectively extending one end of the first conductive yarn and one end of the second conductive yarn out of the power-generating fabric structure such that the part, extending out of the power-generating fabric structure, of the first conductive yarn serves as a first flexible electrode and the part, extending out of the power-generating fabric structure, of the second conductive yarn serves as a second flexible electrode; and
coating the power-generating fabric structure with a first insulating layer;
bonding a first conductive layer to the first insulating layer, and connecting the first conductive layer to the second conductive yarn; and
coating both outer surfaces of the first conductive layer and the first flexible electrode with a waterproof shield.

22. A method for manufacturing a power-generating insole, **characterized by** comprising:
bending one first conductive yarn or interweaving a plurality of first conductive yarns to form a power-generating fabric structure, and extending one end of the first conductive yarn out of the power-generating fabric structure such that the part, extending out of the power-generating fabric structure, of the first conductive yarn serves as a first flexible electrode;
coating the power-generating fabric structure with a first insulating layer;
bonding a first conductive layer to the first insulating layer, and connecting a second flexible electrode to the first conductive layer; and
coating both outer surfaces of the first conductive layer and the first flexible electrode with a waterproof shield.
